# EUROPEAN PATENT SPECIFICATION

(11) **EP 0 945 295 B1**
(45) Date of publication and mention of the grant of the patent: **28.05.2003**
(21) Application number: 99105597.1
(22) Date of filing: 18.03.1999
(51) Int. Cl.: B60J 7/08

(54) **Automatic device for moving covering sheets for vehicles**
Automatische Vorrichtung zum Bewegen einer Plane für Fahrzeuge
Dispositif automatique pour le déplacement d'une bâche de véhicule

(30) Priority: 23.03.1998 IT VR980021 U
(43) Date of publication of application: 29.09.1999
(73) Proprietor: Formigari, Pietro, 37052 Sustinenza di Casaleone (VR) (IT)
(72) Inventor: Formigari, Pietro, 37052 Sustinenza di Casaleone (VR) (IT)
(74) Representative: Petraz, Gilberto Luigi

(56) References cited:
- EP-A- 0 427 677
- US-A- 4 225 175
- US-A- 5 002 328

## Description

The present invention relates to an automatic device for the covering and uncovering operations of industrial vehicles such as trucks, lorries, trailer-trucks, tractor semitrailers and alikes, according to the technical features of the preamble of claim 1.

The present invention finds a particularly suitable application in the field of road transport and, preferably, in case trucks whose bodies have sides that can be overturned are used.

### BACKGROUND ART.

There are found to be known in the art several solutions that can be adopted for positioning or removing covering sheets over heavy motor vehicles, particularly trucks, lorries, trailer-trucks, tractor semitrailers and alikes, said sheets having the role of protecting the goods hauled inside their body.

Generally though, such solutions require the use of complex and articulated structures known in the field as hoops that cover the truck body finding support on its side edges.

According to further forms of embodiment already known in the art, these structures are provided with a suitable central frame located longitudinally and/or transversally with respect to the truck that they are fixed onto, said frame being a support to the covering sheet.

However the above mentioned solutions have several disadvantages and drawbacks such as for example the difficulty encountered when positioning covering sheets if these are heavy and encumbering for the structures, a remarkable reduction in the space available to the load that is to be transported because of the presence of the structures themselves, the difficulties that arise for the operators in the manoeuvring phase wherein suitable elevators are employed, operators being in charge of the loading and unloading of goods onto and from the flatcar of said vehicles and having to pay attention at the presence of very articulated and encumbering hoops.

It is further known in the art a semiautomatic device for covering and uncovering industrial vehicle bodies provided with an intermediate hoop located longitudinally along them and suitable for supporting a covering sheet, further inducing it to have a suitable inclination on both sides so as to avoid the presence of stagnant water or snow whose weight might burst the sheet itself and spoil the underlying goods.

Such a semiautomatic device, disclosed in Italian patent n. 1,257,720 comprises a pair of oscillating arms whose lower ends are pivoted in the middle area respectively of the front and back sides of the body of an industrial vehicle, particularly of one that is provided with side edges which can be overturned.

The pair of oscillating arms described above is set in rotary motion by the action of two cylinders of the pneumatic or oleodynamic types, which are located perimetrally respectively on the front and back sides of the vehicle body.

Inside, each cylinder is found to be provided with a suitable shaft whose free end, that is the end that protrudes from the cylinder, is pivoted in a predetermined point of the pair of oscillating arms of which above.

In such a way therefore, following the setting in motion of the shaft inside the cylinder, a rotation of the oscillating arm and a movement of the covering sheet are induced.

Indeed, the higher and lower ends of the oscillating arms that are not engaged in the body are suitable for supporting a roll located along the length of the vehicle and stretching along the whole length of the body, said roll bearing the covering sheet in its wrapped conformation, that can easily be unwrapped from it, too.

The rolling operation which further implies the uncovering of the body is carried out by dint of a small pneumatic motor which is fixed to one end of said roll and is operated in such a way that the roll itself can at least move along the upward stretch that leads from a side edge of the body to the central hoop supporting the sheet

According to a first form of embodiment of the semiautomatic device known in the art, the pair of cylinders is located in the left perimetral area of the front and back sides of the truck and when the body is completely uncovered, the sheet is wrapped around the roll which is located along the right side edge of the truck, the shafts of the pair of cylinders being at their maximum extension.

Once the flatcar has been loaded, in order to be able to accomplish the covering of the goods, the driver or the operator in charge of the loading/unloading operations operates the pneumatic circuit which is suitable for setting the pair of said pistons in motion.

This means therefore that the shafts are retracted inside their respective cylinders, yielding to a rotary action onto the two oscillating arms, consequence of such a thing being a gradual unwrapping of the sheet.

Therefore, during the body covering phase, the pneumatic motor of which above stays inactive and the dragging motion of the oscillating arms is uniquely carried out by part of the pair of cylinders and of the shafts that these are provided with.

In case the accomplishment of the reverse operation is aimed at, that is the uncovering of the body so as to make the flatcar accessible for its traditional loading/unloading operations, the operator has nothing left to do other than operating the pneumatic circuit which is suitable for the operation of the sheet wrapping motor.

Therefore this means that during that vehicle body uncovering phase said pneumatic motor is the only item to be in operation, whereas the pair of cylinders is not operated by the operator.

In the uncovering phase, once the hoop located longitudinally with respect to the body is reached and the roll reaches its top and starts its downward path towards the right side of the vehicle, the roll is slightly slowed down in its descending run by dint of the resilient pull exerted by the cylinders that do not result to be in operation at that stage.

According to a further form of embodiment of the semiautomatic device object of the above mentioned Italian patent, the pair of cylinders is positioned in the right perimetral area respectively of the front and back edges of the vehicle and, when the body is completely uncovered, the sheet is wrapped around the roll located along the right edge of the vehicle, the shafts of the pair of cylinders being located in their least extended position.

Therefore in such a situation, whenever one wants to move the sheet to accomplish the covering of the flatcar of the vehicle, as previously said, the operator operates the pneumatic circuit that is suitable for setting the cylinder shafts in motion, said shafts going from their minimum to their maximum extension, thus protruding towards the outside thereof and inducing the two arms of which above to rotate.

The entire covering path followed by the sheet is therefore accomplished uniquely thanks to the pushing action of said cylinders, as the sheet wrapping motor is not operating at that stage.

In a manner similar to the previously described form of embodiment, during the sheet uncovering phase, the roll is dragged to rotate, going from the left to the right side edge of the body, following the action of exerted by said motor while the pair od cylinders is not in operation.

In such a case the downward path of the roll towards the right edge of the vehicle is uniquely slowed down by the resilient pull of the cylinders that are not in operation at that uncovering phase, as previously stated.

Although it solves some of the problems which are typical of the field that were previously dealt with, the semiautomatic device described above still has disadvantages and drawbacks that jeopardise an optimal operation of the device according to its description.

A first disadvantage is for example that that during the body uncovering phase, more precisely during the downward path that takes the roll from the middle longitudinal hoop to the right side edge of the body, said roll is pushed by the sheet wrapping motor in a constant fashion, and no breaking system whatsoever is provided that is capable of exerting an action onto the roll other than the resilient pull exerted by the cylinders that are not in operation at that stage.

This implies therefore that the roll descends particularly abruptly, more so because of gravity that acts on the roll itself, thing that may cause a damage of the sheet or else of the roll itself because of the undesired collisions onto the side edge of the body, causing among the other things disadvantageous counterblows for the entire device.

In the form of embodiment according to which the downward stretch of the path of the roll coincides with the sheet wrapping operation, a further drawback that can arise following a rapid descent of the roll is the incorrect wrapping of the sheet itself and its subsequent incorrect positioning on the side of the body.

This may give rise to many difficulties during the loading/unloading routine operations following hauling, as it may turn out to be a cause of further problems during the subsequent unwrapping stage of said sheet.

A further drawback of the semiautomatic device described above is given by the double pneumatic circuit that feeds said device itself.

The operating of the pair of cylinders and of the sheet wrapping motor are distinct from each other, the motor resulting to be active during the uncovering phase of the sheet whereas the pair of cylinders being in operation just during the covering phase thereof.

This obviously brings about the need to provide a doubled feeding circuit that is consequently complex from the constructional point of view; furthermore, such a solution implies that the two circuits operate in an autonomous manner one from the other and, consequently, do not result to be suitable for collaborating between themselves in order concertedly cope with possible operational needs arising from the appliance described above.

An automatic device to be used for sheet covering/uncovering of industrial vehicles showing the features of the preamble of claim 1 is known from US 4 225 175 A.

### DESCRIPTION OF THE INVENTION

The present invention aims at obviating the disadvantages and drawbacks which are typical of the state of the art, therefore at proposing an automatic device which is capable of simply and effectively moving covering sheets of industrial vehicle bodies, in particular those of trucks, lorries, trailer-trucks, tractor semitrailers and alikes.

The above aim has been accomplished by the device having the features described in the characterizing part of claim 1.

Dependent claims outline particularly advantageous forms of embodiment of the present invention.

The automatic device according to the present invention comprises a pair of oscillating arms capable of supporting a roll for the wrapping and unwrapping of the covering sheet of industrial vehicle bodies, said oscillating arms being dragged to rotate by means of a pair of either pneumatic or oleodynamic cylinders, and of a sheet wrapping motor that is fixed to the roll, exactly at one of its ends.

According to the invention, the automatic device being dealt with is provided with a feeding circuit of the pneumatic type, generally supplied by a suitable compressor, said feeding circuit being the same for the pair of cylinders and for the sheet rolling motor.

This means therefore that from such a compressor just one pneumatic feeding line originates, and this subsequently subdivides into two distinct feeding lines that are respectively capable of serving the pair of cylinders and the sheet rolling motor of which above by means of a three branch fillet.

According to the present invention, the pair of cylinders is in operation all the time during the body covering and uncovering operations of a given vehicle, operations that will be described in detail below, whereas the sheet rolling motor is in operation only during the body uncovering operation.

This therefore makes it possible to set up a covering/uncovering system for bodies of industrial vehicles, particularly of vehicles equipped with a longitudinal middle hoop and with side edges that can be overturned, that has advantageous features as to simplicity, rapidity and functionality as it does not need any manual intervention by the driver of by the people in charge of the above mentioned operations.

Furthermore, with respect to the closest prior art that was previously highlighted, the device according to the present invention makes it possible to control and adjust at leisure the advancement speed of the roll, mostly during its downward run, avoiding it to be subject to the annying drawbacks mentioned above.

A further advantage of the automatic device according to the present invention is that it does not hinder at all the normal loading/unloading operations, as well as it does not reduce the effective area of the body in order for the goods to be properly positioned.

### ILLUSTRATION OF DRAWINGS

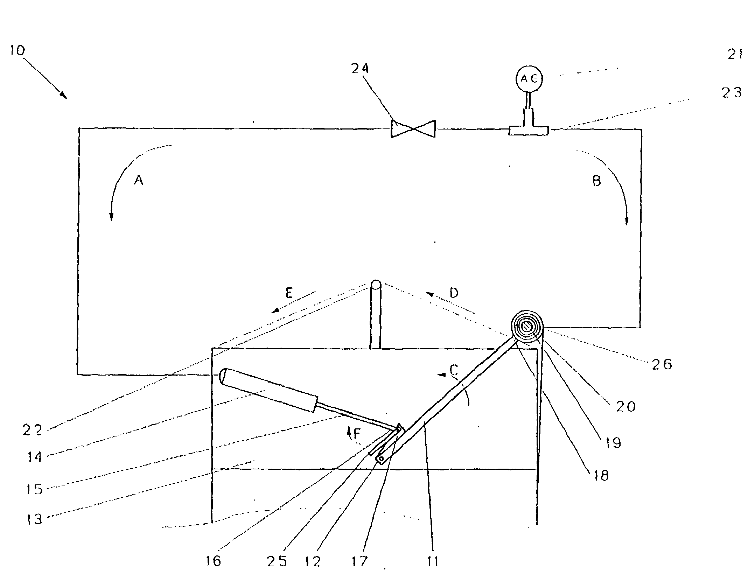

Other features and advantages of the present invention will become evident on reading the description that follows which is given by way of not limiting example, with reference to the Figure shown in the attached table where a diagram of a form of embodiment of the automatic device according to the present invention is shown.

### DESCRIPTION OF ONE FORM OF EMBODIMENT

In the drawing, reference number 10 indicates an automatic device for the moving of covering sheets for industrial vehicles according to the present invention.

The automatic device according to the present invention comprises a couple of oscillating arms 11 (only one of which is shown in the figure), whose lower end 12 is respectively pivoted in the middle area of the front (not shown) and back edges 13 of the body of an industrail vehicle, particularly of a vehicle that is provided with side edges that can be overturned.

According to the present invention, the couple of oscillating arms 11 is induced to rotate thanks to the action exerted by two cylinders 14 (one shown in the figure), of a pneumatic or oleodynamic type, that are positioned in the left perimetral area with respect to the front edge and back edge 13 of the body of the vehicle, this in the first form of embodiment.

Clearly in order to optimise the present invention, the location of said pair of cylinders 14 on the front and back edges is not limiting at all and therefore, according to a further form of embodiment of the present invention, said pair of cylinders 14 can be found in the perimetral right area of the front and back edges of the body.

In a similar fashion, in case the front and back edges, the latter in particular bearing reference number 13, were made of two distinct parts, an upper and a lower part, the upper part being advantageously suitable for being overturned so as to expedite the loading and unloading of the vehicle, a location of the pair of cylinders 14 in the upper of lower areas of said edges can be envisaged.

According to the present invention, each cylinder 14 is provided with a shaft 15 located inside it, whose free end 16 that protrudes from cylinder 14 is pivoted in a predetermined point of the pair of oscillating arms 11, more precisely in a suitable point of a protrusion 17 which is found on each oscillating arm 11.

Upper ends 18 of the oscillating arms 11 are further provided with suitable means, bushings for example, whish are suitable for supporting a roll 19 which is located along the length of the vehicle so as to cover the whole length of the body, said roll 19 being capable of wrapping and unwrapping the covering sheet 20 that is meant to protect the goods hauled by the vehicle itself.

Roll 19 of device 10 according to the present invention is engaged to ends 18 of the oscillating arms 11 so as to be free to rotate around its own axis in order to make it possible for the wrapping and unwrapping of covering sheet 20 to take place.

During the uncovering of the body, such rotation is operated simultaneously by the pair of oscillating arms and by a pneumatic motor 26 fixed at one end of the roll and integral with it, whereas during the covering said rotation is only accomplished by means of the pair of cylinders 14.

According to the present invention, sheet 20 is tightly fixed to roll 19, for example by means of self-threading screws, along its whole length and in such a way that a stretch of the covering sheet is left to protrude from said roll in order for it to be capable of being hooked to the side edge of the vehicle.

More specifically, with reference to the first form of embodiment shown in the figure, sheet 20 is fixed to roll 19 in such a way that once the body has been covered, that is when roll 19 is leaning onto the left side edge of the body, a perimetral portion of the sheet which has been left free from the fixing of which above, protrudes sideways from the body so that sheet 20 can be tightly hooked to the vehicle by dint of an array of hooks and or holes located along the side edges of the body, once the sheet has been totally unwrapped.

Likewise, in the first form of embodiment shown in the figure, sheet 20 which is completely wrapped around roll 19 above the right side edge of the body, has a protruding part of sheet that is suitable for being fixed to the side of the body by suitable means, such as hooks and/or holes.

According to said first form of embodiment of the invention shown in the figure, at the stage of complete uncovering of the flatcar of the vehicle under consideration, shafts 15 of pair of cylinders 14 have maximum extension.

Once the loading/unloading operation has been completed, if ever there had to be the desire to carry out the covering of the body with sheet 20, the driver or the operator in charge, operates through remote commands present in the driving cabin and/or on the side of the body, operates compressor 21 which is bound to feed pair of cylinders 14, (arrow A).

In such an operational phase, in the first form of embodiment of the present invention given in the figure, shafts 15 are pulled inside their respective cylinders 14 causing a rotation of oscillating arms 11 and, subsequently, the covering of the body.

Automatic device 10 according to the present invention operates therefore in such a way that during the upward stretch D that joins the right side edge with the longitudinal middle hoop 22, and along the downward stretch E, that takes roll 19 from hoop 22 towards the left side edge, it is exclusively the pair of cylinders 14 to be in operation whereas the sheet rolling pneumatic motor is not in operation.

On the other hand at the very moment when operations are geared towards wrapping the sheet in order to make the flatcar accessible to the loading/unloading operations, it is first of all necessary to clear the part of the sheet which is kept hooked to the side of the body, by means of rubber bands that cooperate with hooks and/or suitable holos.

Once the above operation has been taken to completion, the driver simply manually folds the perimetral part of the sheet which has been disengaged and places it on roll 19 that is leaning on the edge of the body, this making it possible for that part to be conveniently wrapped around the roll during the following rolling phase.

Once these preliminary operations have been completed, the driver or the operator in charge activates then the pneumatic circuit giving way to the operating of sheet 20 rolling motor 26 (arrow B) and of the pair of cylinders 14 (arrow A) inducing the oscillating arms 11 to rotate so as to move roll 19 from the left side edge towards the right side edge.

In this sheet rolling phase stretch E is covered in an upward direction, whereas stretch D is covered in a downward direction, said stretches needing at this operational phase of body uncovering the simultaneous and constant operation of both the pair of cylinders and of the sheet wrapping motor 26.

According to a further form of embodiment of automatic device 10 (not shown in the figure), the pair of cylinders 14 is positioned along the right perimetral area of the front and back sides 13 of the vehicle and, when the body is completely uncovered, sheet 20 is wrapped around roll 19 along the right side of the vehicle.

According to this last form of embodiment of the present invention, shafts 15 of pair of cylinders 14 in that phase of uncovering of the body are at their minimum extension.

In case one wants to set the sheet in motion in order to accomplish the covering of the vehicle's flatcar, shafts 15 of the pair of cylinders 14 move from their minimum to their maximum extension, protruding out of them and inducing the two oscillating arms 11 to rotate.

Even in that form of embodiment, the upward path D and the downward path E of roll 19 are solely accomplished by the pushing action of the pair of cylinders 14, whereas the reverse body uncovering path is operated by a combined action of the pair of cylinders 14 and of sheet 20 wrapping pneumatic motor 26.

According to the present invention, the pneumatic feeding circuit 21 is common both to the pair of cylinders and to the sheet wrapping motor and is sorted to these components thanks to the presence of a suitable device 23, such as a three way valve for example.

Downstream from said device 23 an organ capable of controlling the feeding flux is positioned, specifically a valve 24, said organ playing the role of adjusting the feeding of the pair of cylinders 14 and of the sheet wrapping motor 26.

In such a way then, the driver or the operator in charge can carry out a calibrating operation in order to achieve a constant and optimal motion of the roll 19 anytime, for example varying the pushing action of motor means 14, 26 on the basis of the dimensions of the sheet that is being motioned and by the same token, of its weight.

Automatic device 10 according to the present invention is furthermore provided with a pair of blocking elements 25 (only one is shown in the figure) that very simply and safely makes it possible to maintain oscillating arms 11 in their blocked position, advantageously normal to the flatcar.

In such a position, roll 19 supported by vertically located oscillating arms is located centrally with respect to the body and above it, leaving a large room for manoeuvring to the operators in charge of the loading/unloading operations of the goods which are generally carried out by dint of suitable elevating means.

Said device 25 consists of a pair of metal sticks which have got one end pivoted to rotate in the protruding area 17 of oscillating arms 11, advantageously at the very point where shafts 15 of the pair of cylinders 14 are engaged to oscillating arms 11.

Such a blocking device is manually operated by inducing the metal sticks 25 to rotate towards the shafts 15 (arrow F) so as to end up being parallel thereto.

The blocking is only operated in shaft 15 retreating phase inside pair of cylinders 14 as once they are turned, they prevent said shafts 15 from retracting beyond a certain given limit, blocking automatic device 10 according to the invention.

Therefore this means that sticks 25 are chosen to have a suitable length so that, during the path shafts 15 follow when retracting, the device can be blocked exactly at the point corresponding with a position of oscillating arms 11 that is normal to the vehicle flatcar.

According to a further form of embodiment (which is not shown) of the present invention, oscillating arms 11 have such an advantageous conformation of the telescopic type that makes it possible to change their length at their upper ends 18, that is in the area which is not engaged in the back side of the body.

Such a form of embodiment is particularly interesting and comfortable mostly in case the vehicle is loaded beyond the limit determined by the height of the edges of the loading compartment.

In such a case in fact telescopic oscillating arms 11 make it possible to adequately cover the load without running the risk of damaging the covering sheet or of travelling with insufficiently covered goods, the latter representing a dangerous situation, too.

According to such a form of embodiment, the side edges of the vehicle are provided with a second set of hooks and/or holes (not shown) located near the perimetral side edges, said second set being capable of accomplishing an adequate and valid fixing of the sheet whenever the telescope oscillating arms 11 are used when they are extended, to cover a protruding load.

The invention has been previously described with reference to some of its forms of embodiment.

It is nevertheless clear that the scope of the invention is not limited to these forms of embodiment, but that it comprises all the variants and modifications that may be considered, without in so doing stepping out of the scope of the present invention as defined in the claims.

For example, according to a further form of embodiment of the present invention, pair of cylinders 14 and pneumatic motor 26 are simultaneously in operation both during the body covering and uncovering phases.

Such an operational procedure is particularly relevant because in such a way, during the covering phase motor 26 aids the pair of cylinders 14 along the upward path D and contributes towards conferring a constant speed to the roll when this runs along its downward path E.

## Claims

1. Automatic device (10) which can be used for sheet (20) covering/uncovering with of industrial vehicles such as trucks, lorries, trailer-trucks, tractor semitrailers and alikes, said covering sheets (20) having the function of protecting goods during hauling and having to be removed during the loading and unloading phases, said automatic device (10) comprising at least a pair of oscillating arms (11) capable of supporting a roll (19) for wrapping/unwrapping said sheet (20) placed along the length of the body of a given vehicle, the lower end (12) of said oscillating arms (11) being engaged in a middle area of the front and back (13) sides of the body of said vehicle, furthermore comprising first motor means (14) capable of inducing said at least one pair of oscillating arms (11) to rotate said first motor means (14) are constantly in operation throughout the whole duration of the wrapping and unwrapping of said sheet (20), **characterised in that**
a second motor means (26) capable of inducing said roll (19) to rotate, said second motor means (26) are in operation during the sheet (20) wrapping phase, and **in that** said automatic device (10) is provided with a feeding circuit (21) which is common to said first (14) and second (26) motor means.

2. Automatic device according to claim 1, **characterised in that** said first motor means (14) are made of a pair of cylinders which are pneumatically or oleodynamically fed.

3. Automatic device according to anyone of the preceding claims, **characterised in that** said second motor means (26) are made of a sheet (20) wrapping motor of an oleodynamic or pneumatic type.

4. Automatic device (10) according to anyone of the preceding claims, **characterised in that** a three way valve (23) subdivides said common feeding circuit into two distinct feeding lines that are capable of respectively serving the pair of cylinders (14) and said sheet (20) rolling motor.

5. Automatic device (10) according to anyone of the preceding claims, **characterised by** the fact that said at least one pair of cylinders (14) is positioned in the left perimetral area of the front side and of the back side (13) of the body of a given vehicle.

6. Automatic device (10) according to anyone of claims between 1 and 4, **characterised in that** said at least one pair of cylinders (14) is positioned in the right perimetral area of the front side and of the back side (13) of the body of a given vehicle.

7. Automatic device (10) according to anyone of the preceding claims, **characterised in that** said at least one pair of cylinders (14) is positioned in the upper or lower area of the front and back sides (13) of the body of a given vehicle.

8. Automatic device (10) according to anyone of the preceding claims, **characterised in that** the free ends (16) of the shafts (15) of said cylinders (14) are engaged in a protruding part (17) which said at least one pair of oscillating arms (11) is provided with.

9. Automatic device (10) according to anyone of the preceding claims, **characterised in that** the sheet (20) is tightly fixed to the roll (19) for its whole length, for example by dint of self-threading screws.

10. Automatic device (10) according to anyone of the preceding claims, **characterised in that** the operation of said device (10) occurs through remote commands which are located in the driver's cabin and/or by leverages located on one side of the body.

## Patentansprüche

1. Automatische Vorrichtung (10), die für das Zudecken/Freilegen einer Plane (20) auf industriellen Fahrzeugen wie Lastwagen aller Art, traktorgeschleppten Anhängern u.dgl. benutzbar ist, wobei die Abdeckplanen (20) die Funktion haben Güter während des Transports zu schützen, und in den Ein/und Ausladephasen abgezogen werden müssen, wobei die automatische Vorrichtung (10) zumindest ein Paar oszillierender Arme (11) aufweist, die imstande sind eine Rolle (19) zum Auf-/Abwickeln der Plane (20) zu tragen, die entlang der Länge des Körpers eines vorgegebenen Fahrzeugs platziert ist, wobei das untere Ende (12) der oszillierenden Arme (11) in einer Mittelzone der Vorder- und Rückseiten (13) des Fahrzeugaufbaus eingreift, des weiteren eine erste Motoreinrichtung (14) aufweist, die imstande ist das mindestens eine Paar oszillierender Arme (11) zum Rotieren zu bringen, wobei die erste Motoreinrichtung (14) während der gesamten Dauer des Auf- und Abwickelns der Plane (20) in Betrieb ist, **dadurch gekennzeichnet, dass** eine zweite Motoreinrichtung (26) die Rolle (19) zum Rotieren bringt, wobei die zweite Motoreinrichtung (26) während der Aufwickelphase der Plane (20) in Betrieb ist, und dadurch, dass die automatische Vorrichtung (10) mit einem Speisekreis (21) ausgestattet ist, der den ersten (14) und den zweiten (26) Motoreinrichtungen gemeinsam ist.

2. Automatische Vorrichtung nach Patentanspruch 1, **dadurch gekennzeichnet, dass** die erste Motoreinrichtung (14) aus einem Zylinderpaar hergestellt ist, das pneumatisch oder hydraulisch gespeist wird.

3. Automatische Vorrichtung nach irgendeinem der vorangehenden Patentansprüche, **dadurch gekennzeichnet, dass** die zweiten Motoreinrichtung (26) aus einem die Plane (20) wickelnden Motor eines hydraulischen oder pneumatischen Typs besteht.

4. Automatische Vorrichtung nach irgendeinem der vorangehenden Patentansprüche, **dadurch gekennzeichnet, dass** ein 3-Wege-Ventil (23) den gemeinsamen Speisekreis in zwei separate Speiseleitungen unterteilt, die imstande sind respektive das Zylinderpaar (14) und den die Plane (20) wickelnden Motor zu bedienen.

5. Automatische Vorrichtung (10) nach irgendeinem der vorangehenden Patentansprüche, **gekennzeichnet durch** die Tatsache, dass zumindest ein Zylinderpaar (14) in der linken perimetralen Zone der Vorderseite und der Rückseite (13) des Aufbaus eines vorgegebenen Fahrzeugs platziert ist.

6. Automatische Vorrichtung (10) nach irgendeinem der vorangehenden Patentansprüche von 1 bis 4, **dadurch gekennzeichnet, dass** das zumindest eine Zylinderpaar (14) in der rechten perimetralen Zone an der Vorderseite und an der Rückseite (13) des Aufbaus eines vorgegebenen Fahrzeugs platziert ist.

7. Automatische Vorrichtung (10) nach irgendeinem der vorangehenden Patentansprüche, **dadurch gekennzeichnet, dass** das zumindest eine Zylinderpaar (14) in der oberen oder unteren Zone der Vorder- und Rückseiten (13) des Aufbaus eines vorgegebenen Fahrzeugs platziert ist.

8. Automatische Vorrichtung (10) nach irgendeinem der vorangehenden. Patentansprüche, **dadurch gekennzeichnet, dass** die freien Enden (16) der Schäfte (15) der Zylinder (14) in einen vorstehenden Teil (17) eingreifen, wobei zumindest ein Paar oszillierender Arme (11) vorhanden ist.

9. Automatische Vorrichtung (10) nach irgendeinem der vorangehenden Patentansprüche, **dadurch gekennzeichnet, dass** die Plane (20) an der Rolle (19) dicht befestigtüber ihre ganze Länge ist, beispielsweise mittels selbstfassender Schrauben.

10. Automatische Vorrichtung (10) nach irgendeinem der vorangehenden Patentansprüche, **dadurch gekennzeichnet, dass** der Betrieb der Vorrichtung (10) aufgrund von Fernbedienbefehlen geschieht, die von der Fahrerkabine und/oder von Hebeleinrichtungen an einer Seite des Fahrzeugaufbaus ausgehen.

## Revendications

1. Dispositif automatique (10) pour recouvrir/découvrir d'une bâche (20) les véhicules industriels comme les camionnettes, les camions, les semi-remorques, les tracteurs à semi-remorque et autres, lesdites bâches (20) ayant la fonction de protection des marchandises pendant le transport et devant être retirées pendant les opérations de chargement et de déchargement, ledit dispositif automatique (10) comprenant au moins une paire de bras oscillants (11) capables de soutenir un rouleau (19) pour enrouler/dérouler ladite bâche (20), placé sur la longueur de la carrosserie d'un véhicule donné, l'extrémité inférieure (12) desdits bras oscillants (11) étant enclenchée dans une zone médiane des côtés avant et arrière (13) de la carrosserie dudit véhicule, comprenant en outre des premiers moyens motorisés (14) susceptibles de provoquer la rotation d'au moins une paire de bras oscillants (11), lesdits premiers moyens motorisés (14) sont constamment en service pendant toute la durée de l'enroulement et du déroulement de ladite bâche (20), **caractérisé en ce que**
des seconds moyens motorisés (26) susceptibles de provoquer la rotation dudit rouleau (19) sont constamment en service pendant la phase d'enroulement de la bâche (20), et **en ce que** ledit dispositif automatique (10) est équipé d'un circuit d'alimentation (21) qui est commun auxdits premiers (14) et seconds (26) moyens motorisés.

2. Dispositif automatique selon la revendication 1, **caractérisé en ce que** lesdits premiers moyens motorisés (14) sont composés d'une paire de cylindres à alimentation pneumatique ou oléodynamique.

3. Dispositif automatique selon l'une quelconque des revendications précédentes, **caractérisé en ce que** lesdits seconds moyens motorisés (26) sont composés d'un moteur d'enroulement de bâche (20) de type oléodynamique ou pneumatique.

4. Dispositif automatique (10) selon l'une quelconque des revendications précédentes, **caractérisé en ce qu'**une valve à trois voies (23) subdivise ledit circuit d'alimentation commun en deux lignes d'alimentation distinctes susceptibles de desservir respectivement la paire de cylindres (14) et ledit moteur d'enroulement de bâche (20).

5. Dispositif automatique (10) selon l'une quelconque des revendications précédentes, **caractérisé par le fait qu'**au moins l'une desdites paires de cylindres (14) est positionnée dans la zone de périphérique de gauche à l'avant et à l'arrière (13) de la carrosserie d'un véhicule donné.

6. Dispositif automatique (10) selon l'une quelconque des revendications 1 à 4, **caractérisé par le fait qu'**au moins l'une desdites paires de cylindres (14) est positionnée dans la zone de périphérique de droite à l'avant et à l'arrière (13) de la carrosserie d'un véhicule donné.

7. Dispositif automatique (10) selon l'une quelconque des revendications précédentes, **caractérisé par le fait qu'**au moins l'une desdites paires de cylindres (14) est positionnée dans la zone supérieure ou inférieure à l'avant et à l'arrière (13) de la carrosserie d'un véhicule donné.

8. Dispositif automatique (10) selon l'une quelconque des revendications précédentes, **caractérisé en ce que** les extrémités libres (16) des arbres (15) desdits cylindres (14) sont enclenchées dans un partie en saillie (17) équipant au moins l'une desdits paires de bras oscillants (11).

9. Dispositif automatique (10) selon l'une quelconque des revendications précédentes, **caractérisé en ce que** la bâche (20) est fixée étroitement au rouleau (19) sur toute sa longueur, par exemple à l'aide de vis autotaraudeuses.

10. Dispositif automatique (10) selon l'une quelconque des revendications précédentes, **caractérisé en ce que** ledit dispositif (10) fait appel à des commandes à distance qui sont situées dans la cabine du conducteur et/ou à des leviers situés sur un côté de la carrosserie.
